(19) Europäisches Patentamt / European Patent Office / Office européen des brevets

(11) **EP 1 970 403 B1**

(12) **EUROPEAN PATENT SPECIFICATION**

(45) Date of publication and mention
of the grant of the patent:
**08.02.2012 Bulletin 2012/06**

(51) Int Cl.:
*C08J 9/04* *(2006.01)*    *B32B 5/18* *(2006.01)*
*B32B 25/08* *(2006.01)*    *C09K 3/10* *(2006.01)*

(21) Application number: **06835047.9**

(22) Date of filing: **20.12.2006**

(86) International application number:
**PCT/JP2006/325427**

(87) International publication number:
**WO 2007/072885 (28.06.2007 Gazette 2007/26)**

(54) **CLOSED CELL FOAM RUBBER SHEET, LAMINATE, AND WATERPROOF/WATERTIGHT SEALING MATERIAL USING THE SHEET OR LAMIANTE**

GESCHLOSSENZELLIGES SCHAUMSTOFFKAUTSCHUKFELL, LAMINAT UND WASSERFESTES/ WASSERDICHTES DICHTUNGSMATERIAL UNTER VERWENDUNG DES FELLS ODER LAMINATS

FEUILLE DE CAOUTCHOUC CELLULAIRE ETANCHE, STRATIFIE, ET MATERIAU D'ETANCHEITE ETANCHE A L'EAU/HERMETIQUE A L'EAU UTILISANT LA FEUILLE OU LE STRATIFIE

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **21.12.2005   JP 2005367672**
**19.01.2006   JP 2006010761**
**14.04.2006   JP 2006111748**
**06.10.2006   JP 2006274687**

(43) Date of publication of application:
**17.09.2008   Bulletin 2008/38**

(73) Proprietor: **Sekisui Chemical Co., Ltd.**
**Osaka 530-8565 (JP)**

(72) Inventors:
• **TAKAHASHI, Katsunori**
**Hasuda-shi Saitama 3490101 (JP)**

• **HYOUDOU, Shunji**
**Hasuda-shi Saitama 3490101 (JP)**
• **SHIMAMOTO, Michio**
**Mishima-gun Osaka 6180021 (JP)**
• **UCHIDA, Kazuho**
**Mishima-gun Osaka 6180021 (JP)**

(74) Representative: **Merkle, Gebhard**
**TER MEER STEINMEISTER & PARTNER GbR,**
**Patentanwälte**
**Mauerkircherstrasse 45**
**81679 München (DE)**

(56) References cited:
**WO-A1-2005/073299      JP-A- 10 109 372**
**JP-A- 2000 344 924      JP-A- 2004 168 825**
**JP-A- 2004 323 757      JP-A- 2006 265 341**
**US-A- 4 596 684      US-A1- 2003 013 778**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to closed-cell foamed rubber sheets, to laminates, and to waterproof/watertight sealing materials made of the sheets or the laminates, and more particularly to closed-cell foamed rubber sheets and laminates which are obtained by applying crosslinking treatment and foaming treatment to a foamable raw material composition composed mainly of a rubber-based resin and which can be used suitably as sealing materials in various fields such as architecture, construction, electric engineering, electronics and vehicles, and to waterproof/watertight sealing materials made of the sheets or the laminates.

BACKGROUND ART

Nowadays, foams are widely used as sealing materials in various fields such as architecture, construction, electric engineering, electronics and vehicles. Examples of such foams to be used as sealing materials include thermoplastic resin foams made of polyethylene-based resin, polypropylene-based resin or the like, and rubber foams made of synthetic rubber or natural rubber.

Among sealing materials, waterproof/watertight sealing materials are items which are used for filling up gaps in various structures such as vehicles, architectural/constructional products, and light electric appliances and prevent water from entering. In such kind of waterproof/watertight sealing materials, a sealing material made of a foam is disposed in a compressed state about a portion where water should be stopped. It fills up a gap between itself and an interface by its repulsive stress to prevent water from entering. In this case, when the foam, which is a sealing material, is of low compression flexibility, a repulsive force generated by the foam recovering its shape from the compressed state causes problems such as deformation of an element to be sealed or enlargement of the gap to be sealed due to the deformation of the element to be sealed. As a result, the sealing performance is poor and it may be impossible to stop water.

The compression flexibility of foams have been improved by changing cells in a foam to open cells by breaking the cells by certain means such as application of pressure. However, when cells are changed to open cells, a new problem, namely, decrease in the waterproof property, will arise though the compression flexibility of the foam is improved remarkably. That is, when a sealing material made of a foam having an open cell structure is used, although a sealing material much thicker than the gap in a portion to be sealed is needed, a perfect waterproof property can not be expected; for example, the initial sealing property is insufficient.

Generally, rubber foams and the like have superior cushioning properties and therefore are useful for applications such as cushioning materials and padding material. In comparison between closed cells and open cells in a foamed structure, the former has a structure having cells separated in a steric lattice form by partitions and the latter has a structure in which through holes interconnecting adjacent cells are formed in partitions. The latter can be deformed dynamically more easily. However, although open cells can not be expected to have so much of a waterproof action, closed cells can be expected to have a waterproof action due to partitions among cells.

A foamed structure having both closed cells and open cells can be expected to have both easiness in the filling work into complex gaps caused by the easy-deformability due to the open cells and the waterproof property due to the closed cells. It, therefore, is assumed to be suitable as a fixed-form waterproof sealing material to be used by filling into complex gaps. For example, a fixed-form sealing material has been proposed in which a foamed skin is rendered water-absorption swellable by forming it from a foamed structure having both closed cells and open cells and adjusting the number of cells per a length of 1 cm to eight or more (see, for example, Patent Document 1).

In use of a foamed structure having both closed cells and open cells as a waterproof sealing material, however, there is a problem as follows. The repulsive force as a foamed structure is relaxed with time and, in association therewith, the contact pressure in the interface between the surface of the foamed structure and the surface of the element to be sealed (a structural element to which waterproofing is to be applied) decreases, resulting in occurrence of water leakage along the interface. As a result, the foamed structure comes not to work effectively as a waterproof sealing material.

Therefore, there are strong demands for high-performance foamed structures which are formed of a foamed structure having closed cells for exerting waterproof performance and which maintain excellent interface adherence without relaxation of the repulsive stress as a foamed structure even when used for a long time, and for waterproof/watertight sealing materials made of the structures.

Patent Document 1: JP-A 09-111899

DISCLOSURE OF THE INVENTION

PROBLEMS TO BE SOLVED BY THE INVENTION

In light of the aforementioned problems with the conventional technologies, an object of the present invention is to provide a high-performance closed-cell foamed rubber sheet which comprises a foamed structure having closed cells and which exhibits excellent interface adherence to an element to be sealed (a structural element to which waterproofing is to be applied) even when used as a waterproof sealing material for a long time, and a high-performance waterproof/watertight sealing material made of the sheet.

MEANS FOR SOLVING THE PROBLEMS

As a result of intensive studies for achieving the object, the present inventors found that when the apparent density and the compression set of a closed-cell foamed rubber sheet obtained by subjecting a foamable raw material composition composed mainly of a nitrile-butadiene rubber (NBR) to crosslinking treatment and foaming treatment are adjusted into specific ranges, the sheet shows excellent interface adherence to an element to be sealed (a structural element to which waterproofing is to be applied) for a long period of time when used as a waterproof sealing material though it develops low repulsion (low repulsive stress), and therefore it excels in the waterproof property. Through further investigations, they have accomplished the present invention.

That is, the closed-cell foamed rubber sheet of the present invention is characterized by being obtained by subjecting a foamable raw material composition composed mainly of a nitrile-butadiene rubber (NBR) to crosslinking treatment and foaming treatment and having an apparent density of from 30 to 100 kg/m$^3$ as measured in accordance with JIS K7222 and a compression set of 60% or less as measured under the conditions of 70°C for 24 hours in accordance with JIS K6262, and wherein the crosslinking treatment is a physical crosslinking by an ionizing radiation.

EFFECT OF THE INVENTION

Use of the closed-cell foamed rubber sheet of the present invention can provide an excellent waterproof/watertight sealing material because adjustment of the apparent density and the compression set into specific ranges is effective in that excellent interface adherence between a waterproof/watertight sealing material made of the closed-cell foamed rubber sheet and a structural element to which waterproofing is to be applied is obtained, that an excellent waterproof property is maintained over a long period of time, and that the reliability can be improved.

When the crosslinking treatment is physical crosslinking by an ionizing radiation , an effect that a closed-cell foamed rubber sheet with desired physical properties can be produced easily is obtained because the crosslinking treatment is specified.

By stipulating the rate of dimensional change caused by heating, a waterproof/watertight sealing material excellent in dimensional stability can be provided.

Furthermore, addition of an organic peroxide having a temperature of one-minute half-life higher than the decomposition temperature of a foaming agent produces an effect that the dimensional stability is improved by subjecting the closed-cell foamed rubber sheet during or after foam-molding.

When the gel fraction of the closed-cell foamed rubber sheet is specified, an effect is obtained that a closed-cell foamed rubber sheet having desired physical properties can be produced easily.

When the rubber-based resin is nitrile-butadiene rubber (NBR), an effect is obtained in that the adherence to a structural element to which waterproofing is to be applied is further improved and thereby the waterproof property is improved.

When the sheet has a 50% compression stress as measured in accordance with JIS K6767 of 60 kPa or less, an effect is obtained in that it shows an excellent waterproof property over a long period of time though it develops low repulsion.

When in the closed-cell foamed rubber sheet, the peel strength as measured in accordance with JIS K6850 is within a specific range, an effect is obtained in that the interface adherence to a structural element to which waterproofing is to be applied is improved and thereby the waterproof property is improved.

When the foamable raw material composition contains a crystalline resin having a melting point of 25°C or higher or a high softening point resin having a softening point of 25°C or higher, a crystal region of the crystalline resin or a glass region of the high softening point resin does not shrink and has so high a modulus of elasticity that it hardly deforms. Therefore, the crystalline resin or the high softening point resin is caused to enter between molecular chains of the rubber-based resin to prevent the rubber-based resin from shrinking and thereby the dimensional stability of the closed-cell foamed rubber sheet can be improved.

When the resin layer is integrally laminated on one side or both sides of the foamable raw material composition before the foaming of the foamable raw material composition or during the molding of the foamable raw material composition, an effect is obtained in that the production variance can be reduced because the timing of the formation of the resin layer is specified.

When the laminate has an acrylic-based or rubber-based pressure-sensitive adhesive layer, an effect is obtained in that, in use as a waterproof/watertight sealing material, the interface adherence between the waterproof/watertight sealing material and a structural element to which waterproofing is to be applied is improved and thereby the watertight property is improved.

When the pressure-sensitive adhesive layer in the laminate is formed from a polyurethane-based pressure-sensitive adhesive produced by reacting a raw material comprising a polyol and a polyisocyanate, an effect is obtained in that the adherence and the removability can be imparted, and the waterproof property and the workability can be rendered compatible.

Furthermore, when in the laminate the foamed layer is integrally laminated on one side or both sides of the closed-cell foamed rubber sheet or the laminate, an effect is obtained in that the flexural rigidity of the laminate increases and the handleability thereof can be improved.

When the closed-cell foamed rubber sheet or the laminate is used as a waterproof/watertight sealing material, an effect is obtained in that it shows superior interface adherence with a structural element to which waterproofing is to be applied and a superior waterproof property for a long period of time, and the reliability can be improved.

Therefore, the present invention can provide high-performance closed-cell foamed rubber sheets and laminates which can be used suitably as sealing materials in various fields such as architecture, construction, electric engineering, electronics and vehicles, and to waterproof/watertight sealing materials made of the sheets or the laminates.

BEST MODE FOR CARRYING OUT THE INVENTION

The following is a detailed description about closed-cell foamed rubber sheets and laminates of the present invention and waterproof/watertight sealing materials made of the sheets or the laminates.

The closed-cell foamed rubber sheet of the present invention is characterized in that it is obtained by subjecting a foamable raw material composition composed mainly of a nitrile-butadiene rubber (NBR) to crosslinking treatment and foaming treatment and that it has an apparent density of from 30 to 100 kg/m$^3$ as measured in accordance with JIS K7222 and a compression set of 60% or less as measured under the conditions of 70°C for 24 hours in accordance with JIS K6262, and wherein the crosslinking treatment is a physical crosslinking by an ionizing radiation.

The closed-cell foamed rubber sheet (henceforth, referred to also as "foamed rubber sheet") of the present invention is obtained by subjecting a foamable raw material composition composed mainly of a nitrile-butadiene rubber (NBR) to crosslinking treatment and foaming treatment. It is only required to have closed cells and it may have both open cells and closed cells.

From the viewpoint of waterproof property, it is desirable that the foamed rubber sheet has a closed cell ratio as high as possible. The ratio is preferably 80 to 100% or more, and more preferably 85 to 100%. The closed cell ratio of a foamed rubber sheet means a measurement determined in the following procedure.

First, a specimen which is in a square form measuring 5 cm long in each side and is uniform in thickness is cut out from a closed-cell foamed rubber sheet. Then, the thickness of the specimen is measured and the apparent volume of the specimen $V_1$ is calculated. In addition, the weight of the specimen $W_1$ is measured.

Next, the apparent volume occupied by cells $V_2$ is calculated based on the following formula. The density of the resin constituting the specimen is assumed to be 1 g/cm$^3$.

$$\text{Apparent volume occupied by cells } V_2 = V_1 - W_1$$

Subsequently, the specimen is soaked in 23°C distilled water to a depth of 100 mm from the water surface and a pressure of 15 kPa is applied to the specimen for 3 minutes. Then, the specimen is picked up from the water and water on the surface of the specimen is removed, followed by measurement of the weight of the specimen $W_2$. The open cell ratio $F_1$ and the closed cell ratio $F_2$ are calculated based on the following formulas.

$$\text{Open cell ratio } F_1 \ (\%) = 100 \times (W_2 - W_1)/V_2$$

$$\text{Closed cell ratio } F_2 \text{ (\%)} = 100 - F_1$$

The closed-cell foamed rubber sheet is required to have an apparent density of from 30 to 100 kg/m$^3$ as measured in accordance with JIS K7222 and a compression set of 60% or less as measured under the conditions of 70°C for 24 hours in accordance with JIS K6262.

If a foamed rubber sheet has an apparent density of less than 30 kg/m$^3$, the foamed rubber sheet is so brittle that it cannot maintain its strength. Therefore, in use as a waterproof/watertight sealing material, it cannot maintain its waterproof property for a long period of time. Conversely, if a foamed rubber sheet has an apparent density of greater than 100 kg/m$^3$, the foamed rubber sheet is so hard that it has reduced compression flexibility and a large repulsive force is produced when it is compressed. In addition, the workability is impaired and, in its use as a sealing material, an element to be sealed may be deformed or the gap to be sealed may be enlarged due to the deformation of the element to be sealed.

If a closed-cell foamed rubber sheet has a compression set (70°C, 24 h) of greater than 60%, the foamed rubber sheet is poor in the shape recovering property and in its use as a waterproof/watertight sealing material, it cannot maintain its waterproof property for a long period of time. It is desirable that the compression set (70°C, 24 h) of a closed-cell foamed rubber sheet is as small as possible. Particularly, products having a compression set of 55% or less are preferable because of their excellent shape recovering property. The compression set is more preferably from 5 to 55%, and particularly preferably from 5 to 45%.

The foamed rubber sheet of the present invention preferably shows a 50% compression stress as measured in accordance with JIS K6767 of 60 kPa or less. The lower limit of the 50% compression stress is not particularly limited, but it preferably is 10 kPa or more because, in use as a waterproof/watertight sealing material, the waterproof property can be improved more. If the 50% compression stress is greater than 60 kPa, the foamed rubber sheet cannot sufficiently follow the shape of a portion to be sealed because of its insufficient flexibility. This will result in generation of a gap between the sheet and the portion to be sealed, which will cause poor waterproofing. That is, the foamed rubber sheet of the present invention preferably has a 50% compression stress of 60 kPa or less (and 10 kPa or more) and therefore it exerts an excellent waterproof property though it develops low repulsion. As a result, an excellent waterproof/watertight sealing material can be provided.

The closed-cell foamed rubber sheet of the present invention is obtained by subjecting a foamable raw material composition containing a resin composed mainly of a nitrile-butadiene rubber (NBR) to crosslinking treatment and foaming treatment. The production method thereof is not particularly limited and known methods may be used. Examples include , (1) a method in which a foamable raw material composition comprising a nitrile-butadiene rubber (NBR) , a thermal decomposition type foaming agent and, if necessary, a filler or the like is kneaded in a kneading machine such as a Banbury mixer or a pressurizing kneader, then continuously kneaded in a calendar, an extruder, a conveyer belt casting machine or the like to yield a foamable sheet, and the foamable sheet is irradiated with an ionizing radiation to be crosslinked, and then the foamable sheet is heated to be foamed, yielding a closed-cell foamed rubber sheet, , (2) a method of producing a closed-cell foamed rubber sheet in which a foamable raw material composition comprising a nitrile-butadiene rubber (NBK), a thermal decomposition type foaming agent and, if necessary, a filler or the like is kneaded in a kneading machine such as a Banbury mixer or a pressurizing kneader, then continuously kneaded in a calendar, an extruder, a conveyer belt casting machine or the like to yield a foamable sheet, and the uncrosslinked foamable sheet is heated to be foamed to yield a foam-molded article, and the foam-molded article is irradiated with an ionizing radiation to be crosslinked, and (3) a method in which a foamable raw material composition comprising a nitrile-butadiene rubber (NBR), a crosslinking agent, a thermal decomposition type foaming agent and, if necessary, a filler or the like is kneaded in a kneading machine such as a Banbury mixer or a pressurizing kneader, then continuously kneaded in a calendar, an extruder, a conveyer belt casting machine or the like to yield a foamable sheet, and the foamable sheet is irradiated with an ionizing radiation to be crosslinked, and the foamable sheet is heated to be foamed and then it is crosslinked by the crosslinking agent, yielding a closed-cell foamed rubber sheet. The rubber-based resins are only required to be contained in an amount of 50% by weight or more in the foamable raw material compositions.

Examples of the above-mentioned cross-linking agents include organic peroxides, sulfur and sulfur compounds. Organic peroxides are preferred. Examples of the ionizing radiations include light, a γ-ray and an electron ray. Examples of the above-mentioned organic peroxides include diisopropylbenzene hydroperoxide, 2,4-dichlorobenzoyl peroxide, benzoyl peroxide, tert-butyl perbenzoate, cumyl hydroperoxide, tert-butyl hydroperoxide, 1,1-di(tert-butylperoxy)-3,3,5-trimethylhexane, n-butyl-4,4-di(tert-butylperoxy)valerate, α,α'-bis(tert-butylperoxyisopropyl)benzene, 2,5-dimethyl-2,5-di(tert-butylperoxy)hexyne-3, and tert-butylperoxycumene. Examples of the sulfur compounds include tetramethylthiuramdisulfide, tetramethylthiurammonosulfide, zinc dimethyldithiocarbamate, 2-mercaptobenzothiazole, dibenzothiazyl disulfide, N-cyclohexyl-2-benzothiazolesulfenamide, N-tert-butyl-2-benzothiazolesulfenamide, sulfur monochloride, and sulfur dichloride.

The physical crosslinking by irradiation of an ionizing radiation and the chemical crosslinking using a crosslinking agent may be used together. Specifically, a closed-cell foamed rubber sheet can be produced by kneading, in a kneading machine, a foamable raw material composition comprising a nitrile-butadiene rubber (NBR) a crosslinking agent, a thermal decomposition type foaming agent, and a filler, a stabilizer or the like, which are added if necessary, followed by continuously kneading in an extruder or the like to produce a foamable sheet, then crosslinking the foamable sheet by irradiating the uncrosslinked foamable sheet with an ionizing radiation, heating the foamable sheet to foam it, and then further crosslinking it using a crosslinking agent.

It is desirable to use a crosslinking agent which has a temperature of one-minute half-life higher than the decomposition temperature of the thermal decomposition type foaming agent. The reason for this is that by use of a thermal decomposition type foaming agent and a crosslinking agent satisfying the aforementioned conditions, it is possible to perform crosslinking after foam-molding and to obtain a foamed rubber sheet having high dimensional stability. In addition, it is also possible to obtain a foam having a high expansion ratio and a high degree of crosslinking. The decomposition temperature of a thermal decomposition type foaming agent means a temperature at which the thermal decomposition type foaming agent starts rapid decomposition. Specifically, it means a temperature at which the weight decreases by 50% by weight when the measurement is conducted by thermogravimetric analysis (TG) at a temperature rising speed of 1°C/min.

The content of the crosslinking agent in the foamable raw material composition may be adjusted properly depending upon the properties of the rubber-based resin and the application of the closed-cell foamed rubber sheet. Specifically, in the case of performing the crosslinking treatment of a foamable raw material composition by using only a crosslinking agent, the content of the crosslinking agent in the foamable raw material composition is preferably from 0.1 to 10 parts by weight, and more preferably from 0.2 to 7 parts by weight based on 100 parts by weight of the nitrile-butadiene rubber (NBR) because if it is too small, the gel fraction (crosslinking degree) of the foamable raw material composition may fail to become suitable for foaming, resulting in occurrence of foam breakage, which may lead to failure in obtaining a closed-cell foamed rubber sheet; conversely, if the content is too large, the gel fraction (crosslinking degree) of the foamable raw material composition may become too high and, as a result, the foamable raw material composition may fail to be foamed.

In the case of performing the crosslinking treatment of a foamable raw material composition by combined use of a crosslinking agent and an ionizing radiation, when the temperature of one-minute half-life of the crosslinking agent is higher than the decomposition temperature of the thermal decomposition type foaming agent, the content of the crosslinking agent in the foamable raw material composition is preferably from 0.05 to 10 parts by weight, and more preferably from 0.1 to 5 parts by weight based on 100 parts by weight of the nitrile-butadiene rubber (NBR) because if it is too small, the effect caused by the addition of the crosslinking agent may fail to develop; conversely, if it is too large, a resulting closed-cell foamed rubber sheet may become hard to have reduced compression flexibility.

In the case of performing the crosslinking treatment of a foamable raw material composition by combined use of a crosslinking agent and an ionizing radiation, when the temperature of one-minute half-life of the crosslinking agent is lower than the decomposition temperature of the thermal decomposition type foaming agent, the content of the crosslinking agent in the foamable raw material composition is preferably from 0.05 to 5 parts by weight based on 100 parts by weight of the nitrile-butadiene rubber (NBR) because if it is too small, the gel fraction (crosslinking degree) of the foamable raw material composition may fail to become suitable for foaming, resulting in occurrence of foam breakage, which may lead to failure in obtaining a closed-cell foamed rubber sheet; conversely, if the content is too large, the gel fraction (crosslinking degree) of the foamable raw material composition may become too high and, as a result, the foamable raw material composition may fail to be foamed.

The content of the thermal decomposition type foaming agent in a foamable raw material composition is preferably from 3 to 20 parts by weight, and more preferably from 5 to 15 parts by weight based on 100 parts by weight of the nitrile-butadiene rubber (NBR) because if it is too small, the expansion ratio of a closed-cell foamed rubber sheet may fail to become high, resulting in a high apparent density, and as a result, the closed-cell foamed rubber sheet may develop a high repulsive force; conversely, if it is too large, the apparent density of a closed-cell foamed rubber sheet may become low, resulting in a large compression set and in the reduced shape recovering property of the closed-cell foamed rubber sheet, and when the closed-cell foamed rubber sheet is used as a waterproof/watertight sealing material, it may be impossible to maintain the waterproof property over a long period of time.

The dose of the ionizing radiation, which may be adjusted properly depending on the property of the rubber-based resin or the application of the closed-cell foamed rubber sheet, is preferably from 0.5 to 10 Mrad, and more preferably from 0.7 to 5.0 Mrad.

The gel fraction of the foamed rubber sheet is preferably from 40 to 95% by weight, and more preferably from 60 to 85% by weight. If the gel fraction is too low, the compression set may become too large. Conversely, if the gel fraction is too high, the compression flexibility may be impaired.

Nitrile-butadiene rubber (NBR) has excellent cushioning property and durability. The nitrile-butadiene rubber (NBR) is also called as nitrile rubber or acrylonitrile-butadiene copolymer rubber.

In the present invention, a crystalline resin or a high softening point resin may also be incorporated in the foamable raw material composition composed mainly of a nitrile-butadiene rubber (NBR) , as an additive for improving the dimensional stability of the closed-cell foamed rubber sheet.

The melting point of a crystalline resin and the softening point of a high softening point resin is preferably 25°C or higher, and more preferably from 50 to 200°C because when they are too low, it may be impossible to improve the dimensional stability of a closed-cell foamed rubber sheet.

The melting point of a crystalline resin means a measurement determined in accordance with JIS K7121. The softening point of a high softening point resin means a measurement determined in accordance with JIS K2207.

The crystalline resin is preferably at least one resin selected from polyolefin-based resins such as polyethylene-based resin and polypropylene-based resin, ethylene-vinyl acetate copolymers, poly(vinyl acetate), ethylene-vinyl chloride copolymers, poly(vinyl chloride), and poly(vinylidene chloride).

The polyethylene-based resin is not particularly limited, and examples thereof include ethylene-alpha-olefin copolymers, low-density polyethylene, medium-density polyethylene, high-density polyethylene, linear low-density polyethylene, linear medium-density polyethylene and linear high-density polyethylene. These may be used singly or in combination. Examples of the alpha-olefin include alpha-olefins such as propylene, 1-butene, 1-pentene, 4-methyl-1-pentene, 1-hexene, 1-octene, 1-nonene and 1-decene.

Examples of the polypropylene-based resin is not particularly limited and examples thereof include propylene homopolymers and propyplene-alpha-olefin copolymers. The propyplene-alpha-olefin copolymer may be a block copolymer, a random copolymer, or a random, block copolymer. Examples of the alpha-olefin include alpha-olefins such as ethylene, 1-butene, 1-pentene, 4-methyl-1-pentene, 1-hexene, 1-octene, 1-nonene and 1-decene.

Examples of the high softening point resin include rosin-based resins, terpene-based resins and petroleum resins. Terpene-based resins are preferred from the viewpoint of the foamability of a foamable raw material composition.

As described above, incorporation of a crystalline resin or a high softening point resin in a foamable raw material composition makes it possible to control the shrinkage of a rubber-based resin by causing a crystal region of the crystalline resin or a glass region of the high softening point resin to enter between molecular chains of the rubber-based resin. Therefore, when the closed-cell foamed rubber sheet is used as a waterproof/watertight sealing material, the interface adherence with a structural element to which waterproofing is to be applied can be improved and the waterproof property can also be improved.

The amount of the crystalline resin or the high softening point resin to be added to the foamable raw material composition is preferably from 1 to 50 parts by weight, and more preferably from 5 to 30 parts by weight based on 100 parts by weight of the nitrile-butadiene rubber (NBR) because if it is too small, it may be impossible to prevent a closed-cell foamed rubber sheet from shrinking, and conversely, if it is too large, a resulting closed-cell foamed rubber sheet may have insufficient flexibility.

For the purpose of adjusting the physical properties of the closed-cell foamed rubber sheet, vulcanization accelerators, vulcanization accelerating aids, vulcanization decelerators, softeners, fillers, antiaging agents, antioxidants, pigments, colorants, antifungal agents, foaming aids, flame retardants, flame retarding aids, and the like may be added to the foamable raw material composition.

Examples of the vulcanization accelerators include aldehyde-ammonias, aldehyde-amines, guanidines, thiazoles, sulfenamides, thiurams, dithiocarbamic acids, xanthogenic acids, and thioureas.

Examples of the vulcanization accelerating aids include zinc oxide, zinc carbonate, magnesium oxide, minium, calcium hydroxide, stearic acid, zinc stearate, amines, and diethylene glycol.

Examples of the vulcanization decelerators include organic acids, such as phthalic anhydride, benzoic acid and salicylic acid, and amines, such as N-nitrosodiphenylamine and N-nitrosophenyl-beta-naphthylamine.

In addition, acrylic-based polymers such as polyalkyl (meth)acrylates and polyvinyl chloride may also be added in order to adjust the viscosity or gel fraction of the foamable raw material composition.

It is desirable to incorporate a softener into the foamable raw material composition composed mainly of a nitrile-butadiene rubber (NBR) in order to improve the formability and dimensional stability of closed-cell foamed rubber sheets. By the incorporation of a softener, a closed-cell foamed rubber sheet is softened and thereby the distortion generated in the closed-cell foamed rubber sheet can be relaxed smoothly. As a result, the dimensional stability of the closed-cell foamed adherence with a structural element to which waterproofing is to be applied can be improved and the waterproof property can also be improved.

The amount of the crystalline resin or the high softening point resin to be added to the foamable raw material composition is preferably from 1 to 50 parts by weight, and more preferably from 5 to 30 parts by weight based on 100 parts by weight of the rubber-based resin because if it is too small, it may be impossible to prevent a closed-cell foamed rubber sheet from shrinking, and conversely, if it is too large, a resulting closed-cell foamed rubber sheet may have insufficient flexibility.

For the purpose of adjusting the physical properties of the closed-cell foamed rubber sheet, vulcanization accelerators, vulcanization accelerating aids, vulcanization decelerators, softeners, fillers, antiaging agents, antioxidants, pigments, colorants, antifungal agents, foaming aids, flame retardants, flame retarding aids, and the like may be added to the foamable raw material composition.

Examples of the vulcanization accelerators include aldehyde-ammonias, aldehyde-amines, guanidines, thiazoles, sulfenamides, thiurams, dithiocarbamic acids, xanthogenic acids, and thioureas.

Examples of the vulcanization accelerating aids include zinc oxide, zinc carbonate, magnesium oxide, minium, calcium hydroxide, stearic acid, zinc stearate, amines, and diethylene glycol.

Examples of the vulcanization decelerators include organic acids, such as phthalic anhydride, benzoic acid and salicylic acid, and amines, such as N-nitrosodiphenylamine and N-nitrosophenyl-beta-naphthylamine.

In addition, acrylic-based polymers such as polyalkyl (meth)acrylates and polyvinyl chloride may also be added in order to adjust the viscosity or gel fraction of the foamable raw material composition.

It is desirable to incorporate a softener into the foamable raw material composition composed mainly of a rubber-based resin in order to improve the formability and dimensional stability of closed-cell foamed rubber sheets. By the incorporation of a softener, a closed-cell foamed rubber sheet is softened and thereby the distortion generated in the closed-cell foamed rubber sheet can be relaxed smoothly. As a result, the dimensional stability of the closed-cell foamed rubber sheet is improved. The softener to be incorporated may be conventionally known one, but a softener which is compatible with a resin is preferred. The amount of a softener to be added is preferably from 1 to 50 parts by weight based on 100 parts by weight of a rubber-based resin, and more preferably from 15 to 30 parts by weight from the viewpoint of securing foamability and reducing the shrinking force.

Examples of the softener include paraffins such as chlorinated paraffin and liquid paraffin, lusters, animal or vegetable oils such as linseed oil, petroleum resins, process oils, lubricating oils, petroleum asphalt, petroleum-based softeners such as vaseline, coal tar-based softeners such as coal tar and coal tar pitch, fatty oil-based softeners such as castor oil, linseed oil, rapeseed oil and coconut oil, waxes such as tall oil, sub oil, bees wax, carnauba wax and lanolin, fatty acids such as ricinoleic acid, palmitic acid and stearic acid, fatty acid esters such as phthalates, fatty acid salts such as barium stearate, calcium stearate and zinc lanolinate, phosphates, alkylsulfonates, and tackifiers.

Examples of the filler include talc, calcium carbonate, bentonite, carbon black, fumed silica, aluminium silicate, acetylene black and aluminium powders.

Examples of the flame retardant include metal hydroxides such as aluminium hydroxide and magnesium hydroxide, bromine-based flame retardants such as decabromodiphenyl ether, and phosphorus-based flame retardants such as ammonium polyphosphate. Examples of the flame retarding aid include antimony compounds such as antimony trioxide, antimony tetroxide, antimony pentoxide, sodium pyroantimonate, antimony trichloride, antimony trisulfide, antimony oxychloride, antimony dichloride perchloropentane and potassium antimonate, boron compounds such as zinc metaborate, zinc tetraborate, zinc borate and basic zinc borate, zirconium oxides, tin oxides and molybdenum oxides.

The method of foaming treatment to be used in the present invention may be any one of the known methods including the method disclosed in "Plastic Foam Handbook, " edited by Hiroshi Maki and Atsushi Osakada, Nikkan Kogyo Shimbun Co. (1973).

The thermal decomposition type foaming agent refers to a substance which decomposes upon heating to generate a foaming gas. Such a thermal decomposition type foaming agent is not particularly limited and examples thereof include azodicarbonamide, benzenesulfonyl hydrazide, dinitrosopentamethylenetetramine, toluenesulfonyl hydrazide, and 4,4-oxybis(benzenesulfonyl hydrazide). These thermal decomposition type foaming agents may be used singly or in combination of two or more. The amount of the thermal decomposition type foaming agent added to the foamable raw material composition is preferably from 1 to 30 parts by weight based on 100 parts by weight of a nitrile-butadiene rubber (NBR).

The expansion ratio of the closed-cell foamed rubber sheet of the present invention is not particularly limited, but in order to achieve an apparent density of from 30 to 100 kg/m$^3$, an expansion ratio of about 10 or more is desirable, for example. The thickness of the closed-cell foamed rubber sheet is not particularly limited, but for use as a waterproof/watertight sealing material, it generally is within the range of from 1 to 20 mm, and preferably is within the range of from 3 to 5 mm.

Another embodiment of the present invention is a laminate including the above-described closed-cell foamed rubber sheet. That is, the laminate of the present invention is composed of the above-described closed-cell foamed rubber sheet and a resin layer which is integrally laminated on one side or both sides of the closed-cell foamed rubber sheet and which has a melting point or a softening point lower than the temperature during the foaming of the foamable raw material composition to be used as the raw material of the closed-cell foamed rubber sheet.

The effect derived from inclusion of the resin layer on one side or both sides of the closed-cell foamed rubber sheet is as follows. In usual, regarding closed-cell foamed rubber sheets composed mainly of a nitrile-butadiene rubber (NBR), when foamed rubber sheets are laminated during the production or a foamed rubber sheet is wound up to form a roll, the foamed rubber sheets or sheet is liable to blocking because of the tackiness derived from rubber and, as a result, it may become difficult to separate the foamed rubber sheets. Moreover, in use of a closed-cell foamed rubber sheet as a sealing material, in order to improve the adherence at the interface between a portion to be sealed and the foamed rubber sheet, a foamed rubber sheet having slight tackiness on its surface is preferred. Therefore, the foamed rubber sheet becomes more liable to blocking.

For solving the problems, by integrally laminating a tack-free material, namely, an unfoamed resin layer to one side or both sides of the closed-cell foamed rubber sheet, it becomes possible to prevent the blocking at the time of lamination of foamed rubber sheets or winding up into a roll.

In use of such a laminate as a sealing material, in order to improve the adherence between a portion to be sealed and the foamed rubber sheet, it is effective to apply a pressure-sensitive adhesive to the tack-free resin layer by a conventional means before arranging the closed-cell foamed rubber sheet to the portion to be sealed.

The resin layer used in the present invention is not particularly limited if it has a melting point or a softening point lower than the temperature during the foaming of the foamable raw material composition to be used as a primary web of the closed-cell foamed rubber sheet. Examples thereof include films made of polyolefin-based resins such as low-density polyethylene, high-density polyethylene, linear low-density polyethylene, polypropylene and ethylene-vinyl acetate copolymers. Such resins may be used singly or in combination of two or more. The melting point of the resin constituting the resin layer means a measurement determined in accordance with JIS K7121. The softening point of the resin constituting the resin layer means a measurement determined in accordance with JIS K2207.

In particular, the resin having a melting point or a softening point lower than the temperature at the time of foaming is not particularly limited. However, because it is preferably extended together with a foamable raw material composition at the time of the foaming of the foamable raw material composition as described later, the resin must be extended at the time of the foaming. From this viewpoint, polyolefin-based resins having a melting point of 170°C or lower are preferred, and polyethylene-based resins having a melting point of 130°C or lower are more preferred. Furthermore, high-density polyethylene having high tensile strength is the most preferable because it is not extended by the tension applied to the sheet in the flow direction. The thickness of the resin layer is preferably from 5 to 100 $\mu$m.

The resin layer preferably has no tackiness on its surface. As a standard thereof, the peel strength, which is determined by preparing two laminates, superposing the laminates with the resin layer of one laminate being on the closed-cell foamed rubber sheet of the other laminate, and measuring the peel strength in accordance with JIS K6854-2, is preferably 50 N/25 mm or less, and more preferably 20 N/25 mm or less.

One example of the method for integrally laminating a resin layer on one side or both sides of a closed-cell foamed rubber sheet is a method in which a film for forming the resin layer is prepared by a conventionally known method, a laminated sheet is prepared by laminating the film on one side or both sides of a foamable sheet made of a foamable raw material composition, and crosslinking treatment and foaming treatment of the foamable sheet are performed by heating the laminated sheet and thereby a closed-cell foamed rubber sheet is formed from the foamable sheet and at the same time a resin layer is integrally laminated on one side or both sides of the closed-cell foamed rubber sheet to yield a laminate. The film for forming the resin layer can be produced by, for example, extrusion forming by the T-die process or the inflation process, calendar forming, or the solution casting process.

The description provided above is directed to a procedure in which a film for constituting a resin layer and a foamable sheet made of a foamable raw material composition are prepared separately and the film is integrally laminated on one side or both sides of the foamable sheet. An alternative is a method in which a foamable sheet is produced by shaping a foamable raw material composition into a sheet form and simultaneously a resin layer is integrally laminated on one side or both sides of the foamable sheet to yield a laminated sheet, and crosslinking treatment and foaming treatment of the foamable sheet are performed by heating the laminated sheet and thereby a closed-cell foamed rubber sheet is formed from the foamable sheet to yield a laminate. As the method for integrally laminating a resin layer on one side or both sides of a foamable sheet to yield a laminated sheet, the extrusion lamination process and the coextrusion process are suitable.

A laminate may be constituted also by integrally laminating, on one side or both sides of the closed-cell foamed rubber sheet or on one side or both sides of the laminate, a foamed layer different than the closed-cell foamed rubber sheet. Such a foamed layer is not particularly limited and examples thereof include polyolefin-based resin foamed sheets, rubber-based resin foamed sheets, polyurethane-based resin foamed sheets. Polyolefin-based resin foamed sheets and rubber-based resin foamed sheets are preferred. The description about the polyolefin-based resin is omitted because the resin is the same as the polyolefin-based resin constituting the resin layer. The polyolefin-based resin foamed sheet preferably has a closed cell ratio of 80% or more. The description about the method of measuring the closed cell ratio of a polyolefin-based resin foamed sheet is omitted because the method is the same as the method of measuring the closed cell ratio of a closed-cell foamed rubber sheet.

The foamed sheet for constituting a foamed layer may be either a closed-cell foamed sheet or an open-cell foamed sheet. From the viewpoint of securing watertightness, a closed-cell foamed sheet is preferred.

The apparent density of the foamed sheet for constituting a foamed layer is preferably from 20 to 100 kg/m$^3$, and more preferably from 22 to 70 kg/m$^3$ from the viewpoint that the compression flexibility and the handleability can be rendered compatible.

The foamed layer may contain conventionally known additives such as antioxidants, fillers, stabilizers, UV absorbers, pigments, antistatic agents, plasticizers, flame retardants, and flame retardant aids.

As the method for integrally laminating a foamed layer on one side or both sides of the closed-cell foamed rubber sheet or one side or both sides of the laminate, known methods are used. Examples thereof include the heat lamination process, the pressure-sensitive adhesive lamination process, the adhesive lamination process, a method using a double-sided tape, and a method using a hot-melt adhesive.

In addition, a pressure-sensitive adhesive layer may also be disposed on one side or both sides of a closed-cell foamed rubber sheet or on one side or both sides of a laminate. In other words, when the laminate is composed of a closed-cell foamed rubber sheet and a resin layer integrally laminated on one side or both sides of the closed-cell foamed rubber sheet, the pressure-sensitive adhesive layer is integrally laminated on the surface of the outermost layer selected from the closed-cell foamed rubber sheets or the resin layer constituting the laminate. When the laminate is composed of a closed-cell foamed rubber sheet, a resin layer integrally laminated on one side or both sides of the closed-cell foamed rubber sheet, and a foamed layer integrally laminated on one side or both sides of the closed-cell foamed rubber sheet or the resin layer, the pressure-sensitive adhesive layer is integrally laminated on the surface of the outermost layer selected from the closed-cell foamed rubber sheets, the resin layer or the foamed layer.

The pressure-sensitive adhesive constituting the pressure-sensitive adhesive layer is not particularly limited, and, for example, polyurethane-based pressure-sensitive adhesives, acrylic-based pressure-sensitive adhesives, and rubber-based pressure-sensitive adhesives may be used. From the viewpoint of being superior in adherence and removability and being compatible in a high waterproof property and high workability, use of a polyurethane-based pressure-sensitive adhesive is desirable.

The polyurethane-based pressure-sensitive adhesive is produced by reacting a raw material containing a polyol and a polyisocyanate. Examples of the polyol include polyester polyols and polyether polyols.

The polyester polyol is a product obtained by reacting a polycarboxylic acid component and a polyol component. Examples of such a polycarboxylic acid component include terephthalic acid, adipic acid, azelaic acid, sebacic acid, phthalic anhydride, isophthalic acid, and trimellitic acid.

Examples of the polyol component include ethylene glycol, propylene glycol, diethylene glycol, butylene glycol, 1,6-hexene glycol, 3-methyl-1,5-pentanediol, 3,3'-dimethylolheptane, polyoxyethylene glycol, polyoxypropylene glycol, 1,4-butanediol, neopentyl glycol, butylethylpentanediol, glycerol, trimethylolpropane, pentaerythritol, and polyester polyols produced by ring-opening polymerization of lactons, such as polycaprolactone, poly($\beta$-methyl-$\gamma$-valerolactone) and polyvalerolactone.

Polyether polyols can be obtained by polymerizing an oxirane compound using a low-molecular-weight polyol as an initiator. Examples of the oxirane compound include ethylene oxide, propylene oxide, butylene oxide, and tetrahydrofuran. Examples of the low-molecular-weight polyol include propylene glycol, ethylene glycol, glycerol, and trimethylolpropane.

The polyisocyanate can be classified into aromatic polyisocyanates, aliphatic polyisocyanates, araliphatic polyisocyanates, and alicyclic polyisocyanates. Examples of the aromatic polyisocyanates include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanato toluene, 1,3,5-triisocyanato benzene, dianisidine diisocyanate, 4,4'-diphenyl ether diisocyanate, and 4,4,4''-triphenylmethane triisocyanate.

Examples of the aliphatic polyisocyanates include trimethylene diisocyanate, tetramethylene diisocyanate, hexamethylene diisocyanate, pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the araliphatic polyisocyanates include $\omega,\omega'$-diisocyanate-1,3-dimethylbenzene, $\omega,\omega'$-diisocyanato-1,4-dimethylbenzene, $\omega,\omega'$-diisocyanato-1,4-diethylbenzene, 1,4-tetramethylxylylene diisocyanate, and 1,3-tetramethylxylylene diisocyanate.

Furthermore, examples of the alicyclic polyisocyanates include 3-isocyanatomethyl-3,5,5-trimethylcyclohexylisocyanate, 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexylisocyanato), and 1,4-bis(isocyanatomethyl)cyclohexane.

The closed-cell foamed rubber sheet or the laminate of the present invention can be used suitably for sealing materials in various fields such as architecture, construction, electric engineering, electronics and vehicles. In particular, it can be used suitably as a waterproof/watertight sealing material or an airtight sealing material because it has an effect that it shows superior interface adherence with a structural element to which waterproofing is to be applied and a superior waterproof property for a long period of time, and the reliability can be improved.

EXAMPLES

The present invention is described in more detail below by way of examples and comparative examples, but the invention is not limited to these examples.

[Example 1]

An uncrosslinked, unfoamed foamable sheet was obtained by kneading a foamable raw material composition composed of 100 parts by weight of an acrylonitrile-butadiene copolymer rubber (NBR; density = 0.96 g/cm$^3$) as a major ingredient, 15 parts by weight of azodicarbonamide ("SO-L" produced by Otsuka Chemical Co., Ltd.; decomposition temperature = 197°C) and 0.1 parts by weight of a phenol-based antioxidant (product name "IRGANOX 1010" produced by Ciba Specialty Chemicals) using a pressurizing kneader, feeding the foamable raw material composition to an extruder, melt-kneading and extruding it.

By irradiating the resulting foamable sheet with an electron beam at a dose of 2 Mrad and an acceleration voltage of 500 keV, a crosslinked, unfoamed foamable sheet was obtained. The crosslinked, unfoamed foamable sheet was heated to 240°C in a foaming oven. Thereby the azodicarbonamide was decomposed and the foamable sheet was foamed. A closed-cell foamed rubber sheet having an apparent density of 35 kg/m$^3$ and a thickness of 2.5 mm was thereby obtained.

[Example 2]

A closed-cell foamed rubber sheet having an apparent density of 56 kg/m$^3$ and a thickness of 2.5 mm was obtained by the same method as in Example 1 except for changing the addition amount of azodicarbonamide to 10 parts by weight.

[Example 3]

A closed-cell foamed rubber sheet having an apparent density of 85 kg/m$^3$ and a thickness of 2.5 mm was obtained by the same method as in Example 1 except for changing the addition amount of azodicarbonamide to 6 parts by weight.

[Example 4]

A closed-cell foamed rubber sheet having an apparent density of 35 kg/m$^3$ and a thickness of 2.5 mm was obtained by the same method as in Example 1 except for adding 0.5 parts by weight of diisopropylbenzene hydroperoxide (product name "PERCUMYL P" produced by NOF Corp.; a temperature of one-minute half-life = 230°C), which is a crosslinking agent, to the formulation of Example 1.

[Example 5]

A closed-cell foamed rubber sheet having an apparent density of 35 kg/m$^3$ and a thickness of 2.5 mm was obtained by the same method as in Example 4 except for changing the addition amount of diisopropylbenzene hydroperoxide (product name "PERCUMYL P" produced by NOF Corp.; a temperature of one-minute half-life = 230°C) to 1.0 part by weight.

[Example 6]

A closed-cell foamed rubber sheet having an apparent density of 35 kg/m$^3$ and a thickness of 2.5 mm was obtained by the same method as in Example 1 except for adding 15 parts by weight of 2-ethylhexyl phthalate (produced by Wako Pure Chemical Industries, Ltd.) as a softener.

[Example 7]

A closed-cell foamed rubber sheet having an apparent density of 35 kg/m$^3$ and a thickness of 2.5 mm was obtained by the same method as in Example 1 except for adding 10 parts by weight of a terpene resin (product name "CLEARON P125" produced by Yasuhara Chemical Co. , Ltd. ; softening point = 125°C), which is a high softening point resin, as an additive.

[Example 8]

On one side of the closed-cell foamed rubber sheet obtained in Example 1, a polyurethane-based pressure-sensitive adhesive (product name "CYABINE SP-205" produced by Toyo Ink Mfg. Co., Ltd.) was applied in a thickness of 20 μm, yielding a laminate in which a pressure-sensitive adhesive layer was integrally laminated on one side of the closed-cell foamed rubber sheet.

[Example 9]

On one side of the closed-cell foamed rubber sheet obtained in Example 1, an acrylic-based pressure-sensitive adhesive (product name "BPS3180" produced by Toyo Ink Mfg. Co., Ltd.) was applied in a thickness of 20 $\mu$m, yielding a laminate in which a pressure-sensitive adhesive layer was integrally laminated on one side of the closed-cell foamed rubber sheet.

[Example 10]

A laminate including a closed-cell foamed rubber sheet having an apparent density of 56 kg/m$^3$ and a thickness of 2.5 mm was obtained by the same method as in Example 1 except for changing the addition amount of azodicarbonamide to 10 parts by weight and extrusion laminating a high-density polyethylene film having a thickness of 40 $\mu$m (product name "HD" produced by Tamapoly Co., Ltd.; melting point = 134°C) as a resin layer on one side of the uncrosslinked, unfoamed foamable sheet during the extrusion of the foamable sheet. After winding the closed-cell foamed rubber sheet into a roll, no blocking occurred. The peel strength of the resin layer of the laminate was 10 N/25 mm. In evaluations of the adhesive strength and waterproof property, a double-sided tape (product name "#5761" produced by Sekisui Chemical Co. , Ltd.) was adhered on the resin layer of the laminate and then the sample was used for the evaluations with the release paper removed.

[Example 11]

A laminate having a thickness of 3.5 mm was obtained by integrally laminating, by the pressure-sensitive adhesive lamination process, a polyethylene foamed sheet (product name "SOFTLON FR-ND#3001" produced by Sekisui Chemical Co., Ltd.; closed cell ratio = 92%, apparent density = 33 kg/m$^3$) to one side of the closed-cell foamed rubber sheet obtained in Example 1.

[Example 12]

A closed-cell foamed rubber sheet having an apparent density of 35 kg/m$^3$ and a thickness of 3.5 mm was obtained by the same method as in Example 1 except for adjusting the resulting closed-cell foamed rubber sheet might have a thickness of 3.5 mm.

[Comparative Example 1]

A closed-cell foamed rubber sheet having an apparent density of 25 kg/m$^3$ and a thickness of 2.5 mm was obtained by the same method as in Example 1 except for changing the addition amount of azodicarbonamide to 20 parts by weight.

[Comparative Example 2]

A closed-cell foamed rubber sheet having an apparent density of 110 kg/m$^3$ and a thickness of 2.5 mm was obtained by the same method as in Example 1 except for changing the addition amount of azodicarbonamide to 4 parts by weight.

[Comparative Example 3]

A closed-cell foamed rubber sheet having an apparent density of 40 kg/m$^3$ and a thickness of 2.5 mm was obtained by the same method as in Example 1 except for using 100 parts by weight of an ethylene-propylene copolymer rubber (EPDM; density = 0.87 g/cm$^3$) as a main raw material and changing the addition amount of azodicarbonamide to 10 parts by weight.

[Comparative Example 4]

A closed-cell foamed rubber sheet having an apparent density of 67 kg/m$^3$ and a thickness of 2.5 mm was obtained by the same method as in Comparative Example 3 except for changing the addition amount of azodicarbonamide to 6 parts by weight.

[Comparative Example 5]

A closed-cell foamed rubber sheet having an apparent density of 98 kg/m$^3$ and a thickness of 2.5 mm was obtained by the same method as in Comparative Example 3 except for changing the addition amount of azodicarbonamide to 4 parts by weight.

[Comparative Example 6]

A closed-cell foamed rubber sheet having an apparent density of 201.6 kg/m$^3$ and a thickness of 2.5 mm was obtained by the same method as in Example 5 except for changing the crosslinking agent to 2,5-dimethyl-2,5-bis(tert-butylperoxy)hex-3-yne (product name "PERHEXYNE 25B" produced by NOF Corp.; a temperature of one-minute half-life = 190°C).

[Comparative Example 7]

A closed-cell foamed rubber sheet having an apparent density of 110 kg/m$^3$ and a thickness of 2.5 mm was obtained by the same method as in Example 5 except for changing the crosslinking agent to dicumylperoxide (produced by NOF Corp.; a temperature of one-minute half-life = 170°C).

[Comparative Example 8]

An attempt to obtain a laminate was made by the same method as in Example 1 except for changing the addition amount of azodicarbonamide to 10 parts by weight and extrusion laminating a polyethylene terephthalate film having a thickness of 50 $\mu$m (product name "E5000" produced by Toyobo Ltd.; softening point = 260°C) as a resin layer on one side of the uncrosslinked, unfoamed foamable sheet during the extrusion of the foamable sheet. However, no laminate was obtained because the resin layer failed to extend during the foaming of the foamable sheet.

(Evaluation)

For the closed-cell foamed rubber sheets and laminates obtained above, the following properties were evaluated.

(1) Apparent density (kg/m$^3$) of closed-cell foamed rubber sheet: Measurement was made in accordance with JIS K7222.

(2) Compression set of closed-cell foamed rubber sheet (Cs: %) : Measurement was made under the conditions of 70°C for 24 hours in accordance with JIS K6262. It is noted that the closed-cell foamed rubber sheets of Comparative Examples 3 -to 5 all had a compression set of greater than 95%.

(3) Compression stress (kPa) at 50% compression of closed-cell foamed rubber sheet: Measurement was made in accordance with JIS K6767.

(4) Peel strength (kPa) of closed-cell foamed rubber sheet or laminate: Measurement was made in accordance with JIS K6850. The evaluation test conditions are as follows. As an adhesive component, a closed-cell foamed rubber sheet 2.5 mm in thickness or a laminate was used. The thickness of the closed-cell foamed rubber sheet or the laminate after adhesion was 2.5 mm. The test panels were acrylic plates sized 25 mm in width and 100 mm in length. The overlap area (adhesive area) was sized 25 mm in width and 12.5 mm in length. The tensile speed was adjusted to 50 mm per minute. In every case, the rupture mode was interfacial peeling. The measurements were conducted immediately after the adhesion of a closed-cell foamed rubber sheet and a laminate to an acrylic plate, after 12-hour aging at 23°C following the adhesion of the closed-cell foamed rubber sheet and the laminate to the acrylic plate, and after 12-hour aging at 70°C following the adhesion of the closed-cell foamed rubber sheet and the laminate to the acrylic plate. In Comparative Examples 3 to 5, the peel strength was less than 5 kPa under all the conditions.

(5) The gel fraction of a closed-cell foamed rubber sheet was measured in the following procedure. 100 mg of a foamed rubber sheet was immersed in 25 ml of ethyl methyl ketone at 70°C (xylene at 110°C for Comparative Examples 3 to 5) for 7 to 22 hours and the undissolved matter was separated by filtration through a 200-mesh wire mesh. The residue on the wire mesh was dried under vacuum and the weight A (mg) of the dry residue was measured. The gel fraction was calculated from the following formula.

$$\texttt{Gel fraction (\% by weight) = 100} \times \texttt{A/100}$$

(6) Waterproof property: Evaluation was conducted by the following procedure.

A specimen was prepared by cutting a closed-cell foamed rubber sheet or a laminate into a ring form having an outer diameter of 100 mm and an inner diameter of 80 mm (10 mm in width, 2.5 mm in thickness) . This specimen was sandwiched between two parallel acrylic resin plates, which were then forced to approach and arranged so that the compression ratio of the specimen became 50% (the distance between the acrylic plates = 1.25 mm).
One of the two acrylic resin plates had a through hole for filling water and for applying pressure in the portion corresponding to the central portion of the specimen. Distilled water was supplied through the through hole and the space surrounded by the opposing surfaces of the two acrylic resin plates and the specimen was filled therewith. Furthermore, a pressure of 15 kPa was applied. The period of time from the time when the pressure application was started and the time when water leakage was recognized was visually observed and was evaluated as a waterproof time (minute). The time when water leakage, even only one drop, was recognized was determined as the end of the waterproof time. The evaluation was made immediately after the arrangement of the specimen between the acrylic resin plates, and after a 12-hour aging at 70°C after the arrangement. The cases of a waterproof time of longer than 72 hours are expressed as "no leakage" in Tables 1 and 2.

(7) Dimensional stability

From a closed-cell foamed rubber sheet or a laminate, a specimen having a plane rectangular form 100 mm in the extrusion direction of the closed-cell foamed rubber sheet (henceforth, referred to as "longitudinal direction") and 100 mm in a direction along the planar direction of the closed-cell foamed rubber sheet and perpendicular to the extrusion direction (henceforth, referred to as "transverse direction") was cut out.
Subsequently, the specimen was aged at 70°C for one week (7 days). Then, the dimensions of the specimen in the longitudinal direction, the transverse direction and the direction perpendicular to the surface of the closed-cell foamed rubber sheet (henceforth, referred to as "thickness direction") were measured, followed by calculation of the rate of shrinkage in each direction using the following formula. The greater rate of shrinkage of that in the longitudinal direction and that in the transverse direction was used as the index of the dimensional stability in the planar direction. The rate of shrinkage in the thickness direction was used as the index of the dimensional stability in the thickness direction.

$$\texttt{Rate of shrinkage (\%) = 100} \times \texttt{(the dimension before aging}$$
$$\texttt{- the dimension after aging)/the dimension before aging}$$

(8) Handleability (Bending amount)

A specimen was prepared by cutting a resulting closed-cell foamed rubber sheet or laminate into a plane rectangular form 200 mm in length and 50 mm in width. The specimen was fixed with one end in the longitudinal direction supported, with a 150-mm portion thereof projecting in the air. One minute later, the bending amount at the free end of the specimen was measured.
The results of the evaluations described above are shown in Tables 1 and 2. For reference, expansion ratios are also shown. All the closed-cell foamed rubber sheets obtained in Examples had closed cell ratios greater than 90%.
Table 1

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Main raw material | | NBR | NBR | NBR | NBR | NBR | NBR | NBR | NBR | NBR | NBR | NBR | NBR |
| Apparent density (kg/m$^3$) | | 35 | 56 | B5 | 35 | 35 | 35 | 35 | 35 | 35 | 56 | 35 | 35 |
| Compression set (%) | | 55 | 47 | 43 | 49 | 47 | 48 | 50 | 55 | 55 | 47 | 58 | 55 |
| Expansion ratio (times) | | 29 | 18 | 11 | 29 | 29 | 29 | 29 | 29 | 29 | 18 | 29 | 29 |
| Closed cell ratio (%) | | >90 | >90 | >90 | >90 | >90 | >90 | >90 | >90 | >90 | >90 | >90 | >90 |
| Gel fraction (% by weight) | | 76 | 75 | 74 | 80 | 85 | 74 | 73 | 76 | 76 | 78 | 76 | 76 |
| 50% Compression stress (kPa) | | 43 | 45 | 52 | 48 | 49 | 40 | 48 | 43 | 43 | 45 | 50 | 43 |
| Peel strength (kPa) | Immediately after adhesion | 27 | 32 | 34 | 31 | 30 | 28 | 28 | 64 | 80 | 34 | 26 | 27 |
| | After aging at 23°C | 46 | 53 | 59 | 56 | 55 | 55 | 53 | 68 | 85 | 55 | 44 | 46 |
| | After aging at 70°C | 74 | 81 | 90 | 90 | 88 | 84 | 77 | 71 | 84 | 88 | 75 | 74 |
| waterproof property (minute) | Immediately after arrangement | No leakage | No leakage | No leakage | No leakage | No leakage | No leakage | No leakage | No leakage | No leakage | No leakage | No leakage | No leakage |
| | After aging at 70°C | No leakage | No leakage | No leakage | No leakage | No leakage | No leakage | No leakage | No leakage | No leakage | No leakage | No leakage | No leakage |
| Dimensional stability (%) | Thickness direction | 10.5 | 10.1 | 10 | 9.6 | 8.5 | 6.29 | 4.81 | 10.5 | 10.5 | 10.5 | 7.1 | 10.5 |
| | Planar direction | 13.33 | 13 | 12.9 | 11 | 9 | 4.11 | 2.88 | 13.2 | 13.2 | 13.3 | 4.5 | 13.33 |
| Bending amount (mm) | | 125 | 123 | 121 | 125 | 125 | 125 | 125 | 125 | 125 | 123 | 50 | 120 |

[Table 2]

| | | comparative Example 1 | Comparative Example 2 | Comparative Example 3 | Comparative Example 4 | Comparative Example 5 | comparative Example 6 | Comparative Example 7 | Comparative Example 8 |
|---|---|---|---|---|---|---|---|---|---|
| Main raw material | | NBR | NBR | EPDM | EPDM | EPDM | NBR | NBR | NBR |
| Apparent density (kg/m$^3$) | | 25 | 110 | 40 | 67 | 98 | 201.6 | 110 | - |
| compression set (%) | | 76 | 43 | >95 | >95 | >95 | 45 | 45 | - |
| Expansion ratio (times) | | 40 | 9 | 25 | 15 | 10 | 5 | 9 | - |
| Closed cell ratio (%) | | >90 | >90 | >90 | >90 | >90 | >90 | >90 | - |
| Gel fraction (% by weight) | | 75 | 76 | 65 | 67 | 67 | 92 | 91 | - |
| 50% Compression stress (kPa) | | 40 | 61 | 72 | 85 | 90 | 73 | 65 | - |
| Peel strength (kPa) | Immediately after adhesion | 18 | 34 | <5 | <5 | <5 | 30 | 31 | - |
| | After aging at 23°C | 39 | 62 | <5 | <5 | <5 | 50 | 52 | - |
| | After aging at 70°C | 50 | 90 | <5 | <5 | <5 | 75 | 76 | - |
| Waterproof property (minute) | Immediately after arrangement | No leakage | No leakage | 8 | 8 | 7 | No leakage | No leakage | - |
| | After aging at 70°C | 0 | No leakage | 0 | 0 | 0 | No leakage | No leakage | - |
| Dimensional stability (%) | Thickness direction | 15.3 | 10.1 | 18.5 | 15.1 | 14.8 | 24 | 21.4 | - |
| | Planar direction | 18.2 | 12.8 | 18.5 | 17.3 | 17 | 24.2 | 22.5 | - |
| Bending amount (mm) | | 128 | 120 | 125 | 123 | 121 | 120 | 120 | - |

From the evaluation results in Tables 1 and 2, it is clear that the closed-cell foamed rubber sheets and laminates of Examples 1 to 11 are within the ranges of the apparent density and compression set defined in the present invention and show high peel strengths, in other words, they are excellent in the interface adherence with an element to be sealed (a structural element to which waterproofing is to be applied) and the waterproof property evaluations are good. Regarding the closed-cell foamed rubber sheets of Examples 4 and 5, the rate of dimensional change (shrinkage) is reduced and the compression set is also reduced by using a crosslinking agent having a temperature of one-minute half-life higher than the decomposition temperature of a foaming agent and applying crosslinking after foaming. Furthermore, it is clear that the closed-cell foamed rubber sheets of Examples 6 and 7 have small rates of shrinkage and are excellent in the dimensional stability because a softener or a high softening point resin has been incorporated. The closed-cell foamed rubber sheets each having a pressure-sensitive adhesive layer of Examples 8 and 9, namely, the laminates can increase the peel strength remarkably and can further improve the waterproof property in comparison to a product having no pressure-sensitive adhesive layer (Example 1). They can be applied as sealing materials under severer conditions.

On the other hand, according to the evaluation results in Table 2, the closed-cell foamed rubber sheet of Comparative Example 1 is out of the range of the compression set defined in the present invention and has a low peel strength, that is, it is poor in the interface adherence. In addition, the waterproof property evaluation after aging at 70°C is poor. The closed-cell foamed rubber sheet of Comparative Example 2 is of low expansion and it is out of the range of the apparent density defined in the present invention. In addition, it develops a high compression stress and is not good in workability. Furthermore, the closed-cell foamed rubber sheets of Comparative Examples 3 to 5 are out of the range of the compression set defined in the present invention and they are low in the peel strength, that is, poor in the interface adherence. Moreover, they are clearly poor in the waterproof property evaluation. As in Comparative Examples 6 and 7, in closed-cell foamed rubber sheets prepared using a crosslinking agent not higher than the decomposition temperature of a foaming agent, crosslinking is conducted before foaming. Therefore, the expansion ratio becomes not so high and the rate of dimensional change (shrinkage) is high. In addition, the compression stress is increased and the workability is poor.

According to the evaluation results in Table 1, the laminate of Example 11 is superior in rigidity to the closed-cell foamed rubber sole sheet of Example 12 and it can improve the handleability.

INDUSTRIAL APPLICABILITY

The closed-cell foamed rubber sheet or the laminate of the present invention can be used suitably for sealing materials in various fields such as architecture, construction, electric engineering, electronics and vehicles. It can be suitably used not only as a waterproof/watertight sealing material but also as various types of sealing materials such as an airtight sealing material, and also a soundproof material and a sound insulating material.

**Claims**

1.  A closed-cell foamed rubber sheet obtained by subjecting a foamable raw material composition composed mainly of a nitrile-butadiene rubber (NBR) to crosslinking treatment and foaming treatment and having an apparent density of from 30 to 100 kg/m$^3$ as measured in accordance with JIS K7222 and a compression set of 60% or less as measured under the conditions of 70°C for 24 hours in accordance with JIS K6262, and wherein the crosslinking treatment is a physical crosslinking by an ionizing radiation.

2.  The closed-cell foamed rubber sheet according to claim 1, which exhibits a rate of dimensional change after aging at 70°C for 7 days of 20% or less in the longitudinal direction, transverse direction, and thickness direction.

3.  The closed-cell foamed rubber sheet according to claim 1, wherein the foamable raw material composition comprises a foaming agent and a crosslinking agent having a temperature of one-minute half-life higher than the decomposition temperature of the foaming agent.

4.  The closed-cell foamed rubber sheet according to claim 1, wherein the sheet has a gel fraction of from 40 to 95% by weight.

5.  The closed-cell foamed rubber sheet according to claim 1, wherein the sheet has a 50% compression stress as measured in accordance with JIS K6767 of 60 kPa or less.

6.  The closed-cell foamed rubber sheet according to claim 1, wherein the sheet exhibits a peel strength as measured in accordance with JIS K6850 of 20 kPa or more immediately after adhesion to an acrylic plate, 40 kPa or more after aging at 23°C for 12 hours after the adhesion, and 60 kPa or more after aging at 70°C for 12 hours after the adhesion.

7.  The closed-cell foamed rubber sheet according to claim 1, wherein the foamable raw material composition comprises 100 parts by weight of the rubber-based resin and 1 to 50 parts by weight of a softener.

8.  The closed-cell foamed rubber sheet according to claim 1, wherein the foamable raw material composition comprises a crystalline resin having a melting point of 25°C or higher or a high softening point resin having a softening point of 25°C or higher.

9.  A laminate comprising a closed-cell foamed rubber sheet obtained by subjecting a foamable raw material composition composed mainly of nitrile-butadiene rubber (NBR) to crosslinking treatment and foaming treatment, wherein the crosslinking treatment is a physical crosslinking by an ionizing radiation, and having an apparent density of from 30 to 100 $kg/m^3$ as measured in accordance with JIS K7222 and a compression set of 60% or less as measured under the conditions of 70°C for 24 hours in accordance with JIS K6262, and a resin layer which is integrally laminated on one side or both sides of the closed-cell foamed rubber sheet and which has a melting point or softening point lower than the temperature during the foaming of the foamable raw material composition to be used as the raw material of the closed-cell foamed rubber sheet.

10.  The laminate according to claim 9, wherein the resin layer comprises a polyolefin-based resin.

11.  The laminate according to claim 9, wherein the resin layer has been laminated on one side or both sides of a foamable sheet comprising the foamable raw material composition before foaming of the foamable raw material composition.

12.  A laminate comprising a closed-cell foamed rubber sheet obtained by subjecting a foamable raw material composition composed mainly of a nitrile-butadiene rubber (NBR) to crosslinking treatment and foaming treatment, wherein the crosslinking treatment is a physical crosslinking by an ionizing radiation, and having an apparent density of from 30 to 100 $kg/m^3$ as measured in accordance with JIS K7222 and a compression set of 60% or less as measured under the conditions of 70°C for 24 hours in accordance with JIS K6262, and a pressure-sensitive adhesive layer integrally laminated on one side or both sides of the closed-cell foamed rubber sheet.

13.  The laminate according to claim 9, wherein a pressure-sensitive adhesive layer is integrally laminated on the closed-cell foamed rubber sheet or the resin layer.

14.  The laminate according to claim 12, wherein the pressure-sensitive adhesive layer comprises a polyurethane-based pressure-sensitive adhesive produced by reacting a raw material comprising a polyol and a polyisocyanate.

15.  The laminate according to claim 13, wherein the pressure-sensitive adhesive layer comprises a polyurethane-based pressure-sensitive adhesive produced by reacting a raw material comprising a polyol and a polyisocyanate.

16.  A laminate comprising a closed-cell foamed rubber sheet obtained by subjecting a foamable raw material composition composed mainly of a nitrile-butadiene rubber (NBR) to crosslinking treatment and foaming treatment, wherein the crosslinking treatment is a physical crosslinking by an ionizing radiation, and having an apparent density of from 30 to 100 $kg/m^3$ as measured in accordance with JIS K7222 and a compression set of 60% or less as measured under the conditions of 70°C for 24 hours in accordance with JIS K6262, and a foamed layer integrally laminated on one side or both sides of the closed-cell foamed rubber sheet.

17.  The laminate according to claim 9, wherein a foamed layer is integrally laminated on the closed-cell foamed rubber sheet or the resin layer.

18.  The laminate according to claim 17, wherein a pressure-sensitive adhesive layer is integrally laminated on the surface of the outermost layer among the closed-cell foamed rubber sheet, the resin layer and the foamed layer.

19.  A waterproof/watertight sealing material comprising the closed-cell foamed rubber sheet or the laminate according to any one of claims 1 to 18.

**Patentansprüche**

1. Geschlossenzellige Moosgummiplatte, erhältlich durch Aussetzen einer schäumbaren Rohmaterialzusammensetzung, im Wesentlichen bestehend aus einem Nitril-Butadienkautschuk (NBR), einer Vernetzungsbehandlung und einer Schäumbehandlung, und welche eine Schüttdichte von 30 bis 100 kg/m$^3$ aufweist, gemessen gemäß JIS K7222, und einem Druckverformungsrestwert von 60 % oder weniger, gemessen unter Bedingungen von 70°C für 24 Stunden gemäß JIS K6262, und wobei die Vernetzungsbehandlung eine physikalische Vernetzung durch eine ionisierende Strahlung ist.

2. Geschlossenzellige Moosgummiplatte gemäß Anspruch 1, welche eine Maßabweichungsrate nach Alterung bei 70°C für 7 Tage von 20 % oder weniger in der Längsrichtung, Querrichtung und Dickenrichtung aufweist.

3. Geschlossenzellige Moosgummiplatte gemäß Anspruch 1, wobei die schäumbare Rohmaterialzusammensetzung ein Schäummittel und ein Vernetzungsmittel mit einer höheren Temperatur der einminütigen Halbwertszeit als die Zersetzungstemperatur des Schäummittels umfasst.

4. Geschlossenzellige Moosgummiplatte gemäß Anspruch 1, wobei die Platte eine Gelfraktion von 40 bis 95 Gew.-% aufweist.

5. Geschlossenzellige Moosgummiplatte gemäß Anspruch 1, wobei die Platte eine 50 prozentige Druckspannung aufweist, gemessen gemäß JIS K6767 von 60 kPa oder weniger.

6. Geschlossenzellige Moosgummiplatte gemäß Anspruch 1, wobei die Platte eine Schälfestigkeit, gemessen gemäß JIS K6850 von 20 kPa oder mehr direkt nach Anhaften an eine Acrylplatte aufweist, 40 kPa oder mehr nach Alterung bei 23°C für 12 Stunden nach der Anhaftung und 60 kPA oder mehr nach Alterung bei 70°C für 12 Stunden nach der Anhaftung.

7. Geschlossenzellige Moosgummiplatte gemäß Anspruch 1, wobei die schäumbare Rohmaterialzusammensetzung 100 Gewichtsteile des kautschukbasierten Harzes und 1 bis 50 Gewichtsteile eines Weichmachers umfasst.

8. Geschlossenzellige Moosgummiplatte gemäß Anspruch 1, wobei die schäumbare Rohmaterialzusammensetzung ein kristallines Harz mit einem Schmelzpunkt von 25°C oder höher oder ein schwer erweichbares Harz mit hoher Erweichungstemperatur von 25°C oder höher umfasst.

9. Laminat, umfassend eine geschlossenzellige Moosgummiplatte, erhältlich durch Aussetzen einer schäumbaren Rohmaterialzusammensetzung, im Wesentlichen bestehend aus Nitril-Butadienkautschuk (NBR), einer Vernetzungsbehandlung und einer Schäumbehandlung, wobei die Vernetzungsbehandlung eine physikalische Vernetzung durch ionisierende Strahlung ist, mit einer Schüttdichte von 30 bis 100 kg/m$^3$, gemessen gemäß JIS K7222, und einem Druckverformungsrestwert von 60 % oder weniger, gemessen unter Bedingungen von 70°C für 24 Stunden gemäß JIS K6262, und eine Harzschicht, welche integral auf eine Seite oder beide Seiten der geschlossenzelligen Moosgummiplatte laminiert ist, und welche einen Schmelzpunkt oder Erweichungspunkt aufweist, welcher niedriger ist als die Temperatur während des Schäumens der schäumbaren Rohmaterialzusammensetzung, zur Verwendung als das Rohmaterial der geschlossenzelligen Moosgummiplatte.

10. Laminat gemäß Anspruch 9, wobei die Harzschicht ein polyolefinbasiertes Harz umfasst.

11. Laminat gemäß Anspruch 9, wobei die Harzschicht vor dem Schäumen der schäumbaren Rohmaterialzusammensetzung auf eine Seite oder beide Seiten einer schäumbaren Platte, umfassend die schäumbare Rohmaterialzusammensetzung, laminiert wurde.

12. Laminat, umfassend eine geschlossenzellige Moosgummiplatte, erhältlich durch Aussetzen einer schäumbaren Rohmaterialzusammensetzung, im Wesentlichen bestehend aus einem Nitril-Butadienkautschuk (NBR), einer Vernetzungsbehandlung und einer Schäumungsbehandlung, wobei die Vernetzungsbehandlung eine physikalische Vernetzung durch ionisierende Strahlung ist, und mit einer Schüttdichte von 30 bis 100 kg/m$^3$, gemessen gemäß JIS K7222, und einem Druckverformungsrestwert von 60 % oder weniger, gemessen unter Bedingungen von 70°C für 24 Stunden gemäß JIS K6262, und eine drucksensitive Klebschicht, welche integral auf eine Seite oder beide Seiten der geschlossenzelligen Moosgummiplatte laminiert ist.

13. Laminat gemäß Anspruch 9, wobei die drucksensitive Klebschicht integral auf die geschlossenzellige Moosgummiplatte oder die Harzschicht laminiert ist.

14. Laminat gemäß Anspruch 12, wobei die drucksensitive Klebschicht ein polyurethanbasiertes drucksensitives Haftmittel umfasst, hergestellt durch Reaktion eines Rohmaterials, umfassend ein Polyol und ein Polyisocyanat.

15. Laminat gemäß Anspruch 13, wobei die drucksensitive Klebschicht ein polyurethanbasiertes drucksensitives Haftmittel umfasst, hergestellt durch Reaktion eines Rohmaterials, umfassend ein Polyol und ein Polyisocyanat.

16. Laminat, umfassend eine geschlossenzellige Moosgummiplatte, erhältlich durch Aussetzen einer schäumbaren Rohmaterialzusammensetzung, im Wesentlichen bestehend aus einem Nitril-Butadienkautschuk (NBR), einer Vernetzungsbehandlung und einer Schäumbehandlung, wobei die Vernetzungsbehandlung eine physikalische Vernetzung durch ionisierende Strahlung ist, und mit einer Schüttdichte von 30 bis 100 kg/m$^3$, gemessen gemäß JIS K7222, und einem Druckverformungsrestwert von 60 % oder weniger, gemessen unter den Bedingungen von 70°C für 24 Stunden gemäß JIS K6262, und eine geschäumte Schicht, welche integral auf eine Seite oder beide Seiten einer geschlossenzelligen Moosgummiplatte laminiert ist.

17. Laminat gemäß Anspruch 9, wobei eine geschäumte Schicht integral auf die geschlossenzellige Moosgummiplatte oder die Harzschicht laminiert ist.

18. Laminat gemäß Anspruch 17, wobei eine drucksensitive Klebschicht integral auf die Oberfläche der äußersten Schicht der geschlossenzelligen Moosgummiplatte, der Harzschicht und der geschäumten Schicht laminiert ist.

19. Wasserfestes/wasserdichtes Dichtungsmaterial, umfassend die geschlossenzellige Moosgummiplatte oder das Laminat gemäß irgendeinem der Ansprüche 1 bis 18.

**Revendications**

1. Feuille de caoutchouc cellulaire étanche obtenue en soumettant une composition de matière première moussante composée principalement de caoutchouc nitrile-butadiène (NBR) à un traitement réticulant et moussant et ayant une densité apparente allant de 30 à 100 kg/m$^3$ mesurée conformément à JIS K7222 et un paramètre de compression de 60 % ou moins mesuré dans des conditions de température de 70° C pendant 24 heures conformément à JIS K6262 et dans laquelle le traitement réticulant est une réticulation physique par radiation ionisante.

2. Feuille de caoutchouc cellulaire étanche selon la revendication 1, qui présente un taux de modification dimensionnelle après vieillissement à 70° C pendant 7 jours de 20 % ou moins dans le sens longitudinal, le sens transversal et le sens de l'épaisseur.

3. Feuille de caoutchouc cellulaire étanche selon la revendication 1, dans laquelle la composition de matière première moussante comprend un agent moussant et un agent réticulant ayant une température supérieure de demi-vie d'une minute supérieure à la température de décomposition de l'agent moussant.

4. Feuille de caoutchouc cellulaire étanche selon la revendication 1, dans laquelle la feuille contient une fraction de gel comprise entre 40 et 95 % en poids.

5. Feuille de caoutchouc cellulaire étanche selon la revendication 1, dans laquelle la feuille a une contrainte de compression de 50 % mesurée conformément à JIS K6767 de 60 KPa ou moins.

6. Feuille de caoutchouc cellulaire étanche selon la revendication 1, dans laquelle la feuille présente une résistance au pelage mesurée conformément à JIS K6850 de 20 kPa ou plus immédiatement après adhérence sur une plaque acrylique, 40 kPa ou plus après vieillissement à 23° C pendant 12 heures après l'adhérence et 60 kPa ou plus après vieillissement à 70° C pendant 12 heures après l'adhérence.

7. Feuille de caoutchouc cellulaire étanche selon la revendication 1, dans laquelle la composition de matière première moussante comprend 100 parts en poids de la résine à base de caoutchouc et 1 à 50 parts en poids d'assouplissant.

8. Feuille de caoutchouc cellulaire étanche selon la revendication 1, dans laquelle la composition de matière première moussante comprend une résine cristalline ayant un point de fusion de 25° C ou plus ou une résine à point d'assouplissement élevé ayant un point d'assouplissement de 25° C ou plus.

9. Stratifié comprenant une feuille de caoutchouc cellulaire étanche obtenue en soumettant une composition de matière première moussante composée principalement de caoutchouc nitrile-butadiène (NBR) à un traitement réticulant et moussant, le traitement réticulant étant une réticulation physique par radiation ionisante, et ayant une densité apparente allant de 30 à 100 kg/m$^3$ mesurée conformément à JIS K7222 et un paramètre de compression de 60 % ou moins mesuré dans des conditions de température de 70° C pendant 24 heures conformément à JIS K6262 et une couche de résine qui est stratifiée intégralement sur une face ou les deux faces de la feuille de caoutchouc cellulaire étanche et qui a un point de fusion ou point d'assouplissement inférieur à la température pendant le moussage de la composition de matière première moussante à utiliser comme matière première de la feuille de caoutchouc cellulaire étanche.

10. Stratifié selon la revendication 9, dans lequel la couche de résine comprend une résine à base de polyoléfine.

11. Stratifié selon la revendication 9, dans lequel la couche de résine a été stratifiée sur une face ou les deux faces d'une feuille moussante contenant la composition de matière première moussante avant le moussage de la composition de matière première moussante.

12. Stratifié comprenant une feuille de caoutchouc cellulaire étanche obtenue en soumettant une composition de matière première moussante composée principalement de caoutchouc nitrile-butadiène (NBR) à un traitement réticulant et moussant, le traitement réticulant étant une réticulation physique par radiation ionisante, et ayant une densité apparente allant de 30 à 100 kg/m$^3$ mesurée conformément à JIS K7222 et un paramètre de compression de 60 % ou moins mesuré dans des conditions de température de 70° C pendant 24 heures conformément à JIS K6262 et une couche adhésive sensible à la pression intégralement stratifiée sur une face ou les deux faces de la feuille de caoutchouc cellulaire étanche.

13. Stratifié selon la revendication 9, dans lequel une couche adhésive sensible à la pression est intégralement stratifiée sur la feuille de caoutchouc cellulaire étanche ou la couche de résine.

14. Stratifié selon la revendication 12, dans lequel la couche adhésive sensible à la pression comprend un adhésif sensible à la pression à base de polyuréthane produit en faisant réagir une matière première contenant un polyol et un polyisocyanate.

15. Stratifié selon la revendication 13, dans lequel la couche adhésive sensible à la pression comprend un adhésif sensible à la pression à base de polyuréthane produit en faisant réagir une matière première contenant un polyol et un polyisocyanate.

16. Stratifié comportant une feuille de caoutchouc mousse cellulaire étanche obtenu en soumettant une composition de matière première moussante composée principalement de caoutchouc nitrile-butadiène (NBR) à un traitement réticulant et moussant, le traitement réticulant étant une réticulation physique par radiation ionisante, et ayant une densité apparente allant de 30 à 100 kg/m$^3$ mesurée conformément à JIS K7222 et un paramètre de compression de 60 % ou moins mesuré dans des conditions de température de 70° C pendant 24 heures conformément à JIS K6262 et une couche de mousse intégralement stratifiée sur une face ou les deux faces de la feuille de caoutchouc mousse cellulaire étanche.

17. Stratifié selon la revendication 9, dans lequel une couche de mousse est intégralement stratifiée sur la feuille de caoutchouc mousse cellulaire étanche ou la couche de résine.

18. Stratifié selon la revendication 17, dans lequel une couche adhésive sensible à la pression est intégralement stratifiée sur la surface de la couche située le plus à l'extérieur parmi la feuille de caoutchouc mousse cellulaire étanche, la couche de résine et la couche de mousse.

19. Matériau de scellement étanche à l'eau/imperméable comprenant la feuille de caoutchouc mousse cellulaire étanche ou le laminé selon l'une quelconque des revendications 1 à 18.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9111899 A